(19) Europäisches Patentamt
European Patent Office
Office européen des brevets

(11) **EP 3 898 286 B1**

(12) **FASCICULE DE BREVET EUROPEEN**

(45) Date de publication et mention de la délivrance du brevet:
**08.02.2023 Bulletin 2023/06**

(21) Numéro de dépôt: **19842823.7**

(22) Date de dépôt: **16.12.2019**

(51) Classification Internationale des Brevets (IPC):
**B60C 11/24** *(1985.01)* **B60C 23/04** *(1968.09)*

(52) Classification Coopérative des Brevets (CPC):
**B60C 11/246; B60C 23/04**

(86) Numéro de dépôt international:
**PCT/FR2019/053091**

(87) Numéro de publication internationale:
**WO 2020/128278 (25.06.2020 Gazette 2020/26)**

(54) **PROCEDE D'OBTENTION DE LA DEFORMATION D'UN PNEUMATIQUE SOUS CHARGE EN ROULAGE**

VERFAHREN ZUR ERHALTUNG DER VERFORMUNG EINES UNTER BELASTUNG FAHRENDEN REIFENS

METHOD FOR OBTAINING THE DEFORMATION OF A TYRE UNDER LOAD WHEN RUNNING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2018 FR 1873907**
**30.01.2019 FR 1900874**

(43) Date de publication de la demande:
**27.10.2021 Bulletin 2021/43**

(73) Titulaire: **COMPAGNIE GENERALE DES ETABLISSEMENTS MICHELIN**
**63000 Clermont-Ferrand (FR)**

(72) Inventeur: **ALFF, Denis**
**63040 CLERMONT-FERRAND Cedex 9 (FR)**

(74) Mandataire: **Roussy, Delphine**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**WO-A1-2006/034731 WO-A1-2018/029320**
**DE-A1-102011 000 556**

**Description**

**Domaine de l'invention**

La présente invention concerne les méthodes d'obtention de la déformation d'une enveloppe pneumatique d'un ensemble monté soumis à une charge en condition de roulage.

**Arrière-plan technologique**

Pour le domaine des dispositifs et des méthodes de mesure de la déformation de l'ensemble monté, ceux-ci servent principalement à caractériser le résultat de la déformation de l'enveloppe pneumatique due à la charge appliquée. Ainsi, les dispositifs et les méthodes cherchent à caractériser principalement l'empreinte au sol du pneumatique que l'on nomme aire de contact. En effet, la géométrie ou la répartition de contraintes au sein de cette aire de contact sont directement liées à la charge appliquée sur l'enveloppe pneumatique moyennant éventuellement la pression de gonflage de l'ensemble monté.

Cette aire de contact qui ne représente qu'un pourcentage minime de la périphérie de l'enveloppe pneumatique en condition monté gonflé est aussi très sensible à divers paramètres comme la macrorugosité du sol ou les irrégularités présentes sur le sol par exemple. En effet, la zone de contact réelle entre l'enveloppe pneumatique et le sol peut alors correspondre aux sommets des indenteurs caractérisant la macrorugosité du sol. Ainsi, la répartition des contraintes dans l'enveloppe pneumatique est modifiée pouvant influer sur les dimensions de l'aire de contact.

De plus, la détermination précise des dimensions de l'aire de contact est difficile à obtenir en condition de roulage. Classiquement en roulage, l'aire de contact se caractérise à l'aide de signaux représentatifs de la déformation de l'enveloppe pneumatique. Ceux-ci se manifestent par un saut important de la grandeur observée traduisant le passage de l'enveloppe pneumatique d'une forme toroïdale libre à une forme toroïdale partiellement écrasée à déplacement imposé. En effet, le sol constitue alors une condition aux limites de type déplacement imposé pour les points matériels de l'enveloppe pneumatique. Il est alors difficile d'identifier les points d'entrée ou de sortie exacts de l'aire de contact notamment en condition de roulage à vitesse variable. De plus, l'aire de contact ne représente qu'une partie du développement de l'enveloppe pneumatique classiquement entre 1/20 et 1/10 du développement de la bande de roulement. Afin d'obtenir une image précise de cette portion du pneumatique, il faut disposer d'une discrétisation fine au niveau du signal de déformation. Ceci nécessite des espaces mémoires conséquents, des fréquences spatiales d'échantillonnage élevées au moins au niveau de l'aire de contact ce qui est consommateur en énergie.

On connait dans l'état de la technique, les documents WO2017/032466A1 et WO2006/034731A1 qui divulguent des dispositifs de caractérisation de la charge appliquée à un ensemble monté sur la base d'un accéléromètre monté sur le pneumatique.

La présente invention porte sur un procédé qui permet une évaluation précise et en temps réel de la déformation de l'enveloppe pneumatique en condition de roulage notamment à vitesse variable tout en économisant les ressources du dispositif de mesure.

**Description de l'invention**

L'invention porte sur une méthode d'obtention de la déformation d'une enveloppe pneumatique soumise à une charge, dans un état gonflé et chargé tournant à une vitesse de rotation W. L'enveloppe pneumatique ayant un sommet, deux flancs et deux bourrelets de révolution autour d'un axe naturel de rotation et un plan médian, l'intersection du plan médian et de l'axe naturel de rotation définit un centre roue. La méthode comprend les étapes suivantes :

- Fixer un capteur sur l'enveloppe pneumatique au droit du sommet ayant une position radiale R par rapport à l'axe naturel de rotation apte à générer au moins un signal de sortie proportionnel à l'accélération subie par ledit capteur dans l'enveloppe pneumatique;

- Réaliser l'acquisition d'un premier signal d'abscisse u comprenant au moins l'amplitude de l'accélération selon la direction normale au sommet lors d'un roulage à la vitesse de rotation W, à une fréquence d'échantillonnage fe dont la discrétisation spatiale est inférieure à 6 degrés, préférentiellement inférieure à 3 degrés, très préférentiellement inférieure à 1 degré ;

- Lors d'une première phase :

  - Figer une première fréquence d'échantillonnage fe1 constante ;

- Délimiter le premier signal sur un nombre entier $N^{TdR1}$ de tours de roue, $N^{TdR1}$ étant supérieur ou égale à 1, afin de construire un premier signal tour de roue $Sig^{TdR1}$;

- Déterminer une première accélération de référence $\gamma^{reference1}$ comme la valeur moyenne du premier signal tour de roue $Sig^{TdR1}$ ramené à un tour de roue selon la formule suivante :

[Math 1]

$$\gamma^{reference1} = \frac{\left( \sum_{Sig^{TdR1}} Sig^{TdR1} \right)}{N^{U1}}$$

- où $N^{U1}$ est le nombre de points de de $Sig^{TdR1}$

- Lors d'une seconde phase :

  - Figer une deuxième fréquence d'échantillonnage fe2 constante ;

  - Délimiter le premier signal sur un nombre entier $N^{TdR2}$ de tours de roue, $N^{TdR2}$ étant supérieur ou égal à 1, afin de construire un second signal tour de roue $Sig^{TdR2}$;

  - Définir au moins une première densité d'énergie S qui est fonction du second signal tour de roue $Sig^{TdR2}$, de l'accélération de référence $\gamma^{reference1}$, nommée $S^+$ lorsque le signal tour de roue est supérieur à un seuil A, ou nommée $S^-$ lorsque le signal tour de roue est inférieure ou égale audit seuil A, selon les formules suivantes :

[Math 2a]

$$S^+ = \left| \sum_{Sig^{TdR2} > A} \left( Sig^{TdR2} - \gamma^{Reference1} \right) \right| * \frac{N^{TdR2}}{N^{U2}}$$

;et

[Math 2b]

$$S^- = \left| \sum_{Sig^{TdR2} \leq A} \left( Sig^{TdR2} - \gamma^{Reference1} \right) \right| * \frac{N^{TdR2}}{N^{U2}}$$

;

  o Où $N^{U2}$ est le nombre de points de $Sig^{TdR2}$

  - Identifier la déformation de l'enveloppe pneumatique $Def_\%$ générée par la charge comme une fonction de la première accélération de référence $\gamma^{reference1}$ et de la première densité d'énergie S selon l'une des formules suivantes :

[Math 3a]

$$Def_\% = \frac{N^{U1}}{N^{U2}} * \frac{\left| \sum_{Sig^{TdR2} > A} \left( Sig^{TdR2} - \gamma^{reference1} \right) \right|}{\left( \sum_{Sig^{TdR1}} Sig^{TdR1} \right)}$$

, ou

[Math 3b]

$$Def_{\%} = \frac{N^{U_1}}{N^{U_2}} \times \frac{\left[\sum_{Signal^{TdR2}>A}\left(Sig^{TdR2} - \gamma^{Reference1}\right)\right]}{\left(\sum_{Sig^{TdR1}} Sig^{TdR1}\right)}$$

, ou

[Math 3c]

$$Def_{\%} = \frac{N^{U_1}}{N^{U_2}} * \frac{\left[\sum_{Sig^{TdR2}>A}\left(Sig^{TdR2} - \gamma^{Reference1}\right)\right] + \left[\sum_{Sig^{TdR2}<A}\left(Sig^{TdR2} - \gamma^{Reference1}\right)\right]}{2*\left(\sum_{Sig^{TdR1}} Sig^{TdR1}\right)}$$

.

Cette méthode se caractérise par ces deux phases distinctives. Lors de la première phase, on évalue un certain nombre de grandeurs sur une partie du premier signal. L'évaluation de ces grandeurs correspond à des opérations mathématiques élémentaires permettant d'économiser l'énergie de la batterie et l'espace mémoire du dispositif électronique. En effet, la détermination de la première accélération de référence ne sert qu'à sommer les valeurs successives du signal issu du capteur et à compter le nombre d'incréments. Lorsqu'on a déterminé le nombre de tour de roue de ce premier signal tour de roue, on divise la somme des valeurs du capteur par le nombre total d'incréments $N^{U1}$ pour obtenir $\gamma^{reference1}$. Ainsi, on minimise l'espace mémoire du dispositif électronique à seulement deux espaces, un premier espace pour la valeur de la somme à l'étape précédente et le second espace pour la nouvelle valeur du capteur. On effectue, la somme que l'on affecte au premier espace, on rentre la nouvelle valeur du capteur dans le second espace. Il faut un compteur qui compte les incréments des valeurs du capteur.

Dans la seconde étape, on utilise les résultats issus de la première phase comme valeurs fixes. Ici, on consomme aussi, pour les valeurs des premières densités d'énergie, peu de ressources du dispositif électronique. En effet, après avoir identifié le premier incrément du deuxième signal tour de roue, on effectue une comparaison de la valeur du capteur avec un seuil A, pour affecter le résultat de la prochaine opération à la densité d'énergie positive $S^+$ ou négative $S^-$. Ce résultat est simplement la différence entre la valeur du capteur et la première accélération de référence. En parallèle, on compte le nombre de valeurs délivrés par le capteur à l'aide d'un compteur $N^{U2}$. Pour un incrément quelconque, on somme la valeur du capteur dans un premier espace mémoire Y. On effectue également la comparaison de cette valeur avec le seuil A pour identifier l'attribution du résultat de cet incrément entre deux compteurs $S^+$ et $S^-$. On fait la différence de la valeur du capteur avec la première accélération de référence. On somme ce résultat avec le compteur $S^+$ ou $S^-$ identifié. On augmente le compteur $N^{U2}$ de valeurs délivrées par le capteur de 1. A la fin du second signal tour de roue, on divise les compteurs $S^+$ et $S^-$ par la valeur du compteur $N^{U2}$ après avoir multiplié la valeur des compteurs par le nombre de tours de roue $N^{TDR2}$ du second signal. On divise également le contenu du premier espace mémoire Y par $N^{U2}$ pour obtenir $\gamma^{reference2}$.

Pour la déformation de l'enveloppe pneumatique, le dispositif utilise de nouveau les résultats issus de la première phase. De plus, on utilise de même le calcul incrémental des différence entre la valeur du capteur et la première accélération de référence que l'on classe selon les compteurs $S^+$ et $S^-$. Cette fois-ci, à la fin des incréments du second signal tour de roue, on multiplie chacun des compteurs $S^+$ et $S^-$ par le nombre total d'incréments $N^{U1}$ du premier signal tour de tour. On divise ensuite chacun des résultats par le nombre total d'incréments $N^{U2}$ du second signal. On identifie ainsi deux valeurs intermédiaires $\alpha$ et $\beta$ associées respectivement aux compteurs $S^+$ et $S^-$. Selon la formule de la déformation de l'enveloppe pneumatique que l'on souhaite employer, on divise ces valeurs intermédiaires par la première accélération de référence $\gamma^{reference1}$ évaluée lors de la première phase ou on somme ces résultats intermédiaires avant de les diviser par deux fois la première accélération de référence $\gamma^{reference1}$.

Ainsi, le résultat souhaité est obtenu en temps réel, à la fin de la deuxième phase. Le résultat ne nécessite que peu de ressources mémoires puisque le découpage en deux phases permet de traiter le signal au fur et à mesure sans stocker la totalité des valeurs de au moins un tour de roue. Et, les opérations effectuées sont élémentaires et sont peu consommatrices en énergie. Enfin, le résultat est précis puisque, contrairement aux méthodes traditionnelles qui se focalisent sur les zones du signal extrêmement réduites d'entrée et de sortie de l'aire de contact, la méthode exploite la totalité du signal. Ainsi, une petite erreur liée par exemple à la discrétisation spatiale n'impactera pas fortement le résultat contrairement aux méthodes traditionnelles. Cela a pour avantage que la méthode fonctionne avec des échantillonnages spatiaux assez grossiers par rapport aux méthodes traditionnelles afin d'atteindre une précision d'au moins aussi bonne qualité, voire meilleure car moins sensible aux évènements extérieurs ponctuels. Enfin, le calcul pouvant avoir lieu au niveau du dispositif électronique associé au capteur, seul le résultat final doit alors être transmis vers l'extérieur du dispositif électronique. Par exemple, cette transmission peut être radiofréquence. Le fait de ne transmettre qu'une grandeur scalaire est économe en énergie par comparaison avec des méthodes dont les données du capteur doivent être complètement ou partiellement transmises.

Avantageusement, l'acquisition du premier signal est effectuée pour une vitesse de rotation W supérieure ou égale à une vitesse de rotation seuil $W_{seuil}$ définie par la formule suivante :

[Math 4]

$$W_{seuil} = \frac{12}{\sqrt{Dev}}$$

;

- où Dev est le développement de l'enveloppe pneumatique.

Ainsi, si la vitesse de roulage est au-delà de la valeur seuil, il est aisé de dissocier le signal tour de roue par rapport à la valeur seuil A et ce quels que soient les aléas dans le signal tour de roue comme, par exemple, une forte macrorugosité de la chaussée, des perturbations électromagnétiques dans la chaine de mesure, des vibrations au niveau de l'enveloppe pneumatique. De plus, cela permet aussi d'identifier plus nettement le signal de la gravité dans le signal tour de roue.

Préférentiellement, la délimitation du premier signal sur un nombre $N^{TdR1}$ comprend les étapes suivantes :

- Lors de la première phase :

  o Identifier une première série des incréments I, correspondant à l'abscisse u du premier signal où le premier signal passe au-dessus ou en dessous d'une valeur seuil E ;

  o Délimiter le premier signal entre un premier incrément $I_{min}$ et un second incrément $I_{max}$ afin de construire un premier signal tour de roue $Sig^{TdR1}$ ;

  o Déterminer le nombre de tours de roue $N^{TdR1}$ comme la différence $I_{max}$ moins $I_{min}$ ;

Dans ce mode de réalisation, on n'emploie que le premier signal pour délimiter celui-ci sur un nombre entier de tour de roue. En effet, le signal d'accélération selon la direction radiale d'une enveloppe pneumatique soumise à une charge va nécessairement tendre vers zéro lors de la traversée de l'aire de contact par le capteur si on néglige le signal de la gravité terrestre comme pour des vitesses de rotation élevées. Ainsi, le premier signal passera nécessairement au niveau d'une valeur seuil E. En fait, le premier signal passera à deux reprises au niveau de ce seuil par tour de roue. La première fois, le franchissement sera par le dessus de la valeur seuil. La seconde fois, le franchissement sera par le dessous de la valeur seuil. Le sens de franchissement correspond soit à l'entrée soit à la sortie de l'aire de contact. En ne prenant en compte qu'un seul type de franchissement, on a un détecteur de tour de roue à partir du premier signal du capteur. Du fait de la discrétisation spatiale grossière qui peut être employée, cette détection est suffisante pour la méthode d'évaluation de la déformation de l'enveloppe pneumatique.

Bien entendu, il est tout à fait possible de délimiter le signal tour de roue par l'intermédiaire d'un codeur tour de roue associé au dispositif électronique comprenant le capteur ou d'utiliser un autre signal ayant une caractéristique au tour de roue. Par exemple, on pourrait utiliser un signal accélérométrique selon la direction longitudinale ou axiale dans le repère de l'enveloppe pneumatique qui présente des spécificités liés à l'entrée ou la sortie de l'aire de contact. Cependant ces méthodes nécessitent de traiter simultanément en plus de la direction radiale de l'accélération d'autres signaux ce qui est coûteux en ressources mémoires et énergétiques.

Très Préférentiellement, l'identification du seuil E comprend les étapes suivantes :

- Avant la première phase :

  o Fixer une fréquence d'échantillonnage fe0 sur une première partie du premier signal ;

  o Identifier la valeur maximale MAX sur la première partie du premier signal;

  o Définir une valeur seuil E qui est fonction de la valeur MAX; préférentiellement E est compris entre 10% et 50% de MAX

Dans ce mode de réalisation très préférentiel, une étape dite d'excursion est faite sur une partie du premier signal afin d'estimer de manière très grossière mais simple une valeur moyenne de ce premier signal que l'on nomme MAX. Bien entendu, il n'est pas nécessaire que la fréquence d'échantillonnage sur cette étape d'excursion soit aussi fine que lors des deux phases de la méthode. De même cette fréquence n'a aucune raison d'être constante, elle peut être adaptative afin d'être plus sélective sur les valeurs du premier signal, le seul objectif étant d'obtenir une valeur qui n'est pas située dans l'aide contact. Moins de 10 acquisitions inégalement espacées sont tout à fait suffisantes. Ce mode de réalisation permet alors de déterminer un seuil E qui ne représente que 10 à 50 % de la valeur MAX identifiée. Ce seuil E servant à la délimitation du premier signal lors de première phase. Si des analyses ont déjà été réalisées sur des tours précédents et que l'on dispose déjà d'une valeur $\gamma^{reference}$ précédente, cette valeur pourra être avantageusement réutilisée comme donnée MAX.

Selon un premier mode de réalisation, la délimitation du premier signal sur un nombre $N^{TdR2}$ comprend les étapes suivantes :

- Lors de la deuxième phase :

  o Identifier une première série des incréments J, correspondant à l'abscisse u du premier signal où le premier signal passe au-dessus ou en dessous d'une valeur seuil E', préférentiellement située en dessous au moins de la moitié de la première accélération de référence $\gamma^{reference1}$ ;

  o Délimiter le premier signal entre un premier incrément $J_{min}$ et un second incrément $J_{max}$ afin de construire un second signal tour de roue $Sig^{TdR2}$ ;

  o Déterminer le nombre de tours de roue $N^{TdR2}$ comme la moitié de la différence $J_{max}$ moins $J_{min}$ ;

Ce mode de réalisation est assez simple à mettre en oeuvre. En effet, lors de la première phase, on a identifié une première accélération de référence $\gamma^{reference1}$ au travers du premier signal tour de roue $Sig^{TdR1}$. Ainsi, il est aisé d'identifier un seuil E'. En effet, le signal d'accélération selon la direction radiale d'une enveloppe pneumatique soumise à une charge va nécessairement tendre vers zéro lors de la traversée de l'aire de contact par le capteur si on néglige le signal de la gravité terrestre comme pour des vitesses de rotation élevées. Ainsi, le premier signal passera nécessairement au niveau d'une valeur seuil située en dessous au moins de la moitié d'une accélération de référence $\gamma^{reference1}$. En fait, le premier signal passera à deux reprises au niveau de ce seuil par tour de roue. La première fois, le franchissement sera par le dessus de la valeur seuil. La seconde fois, le franchissement sera par le dessous de la valeur seuil. Le sens de franchissement correspond soit à l'entrée soit à la sortie de l'aire de contact. En ne prenant en compte qu'un seul type de franchissement, on a un détecteur de tour de roue à partir du premier signal du capteur. Du fait de la discrétisation spatiale grossière qui peut être employée, cette détection est suffisante pour la méthode d'évaluation de la déformation de l'enveloppe pneumatique.

Selon un second mode de réalisation, la délimitation du premier signal sur un nombre $N^{TdR2}$ comprend les étapes suivantes :

- Lors de la première phase :

  o Identifier la période $T_1$ selon la formule suivante : ∘ ∘

$$[\text{Math 5}]$$

$$T_1 = \frac{N^{U1}}{fe1 * N^{TdR1}} \; ;$$

- Lors de la deuxième phase ;

  o Construire un second signal tour de roue $Sig^{TdR2}$ commençant par la première abscisse u du premier signal situé à (1+M)/4 périodes $T_1$, M étant un nombre réel positif inférieur ou égal à 2.0, préférentiellement M est la valeur unité, après la fin du premier signal tour de roue $Sig^{TdR1}$ ;

  o Délimiter le second signal tour de roue $Sig^{TdR2}$ sur une durée $t_2$ correspondant à la période $T_1$ multipliée par un nombre entier naturel N2, préférentiellement N2 est la valeur unité ;

  o Le nombre de tour de roue $N^{TaR2}$ est égal à N2 ;

  o Identifier une première série d'incréments K correspondant à l'abscisse u du premier signal, en commençant par l'abscisse u ayant servi à terminer le premier signal tour de roue $Sig^{TdR1}$, où le premier signal passe au-dessus ou en dessous d'une valeur seuil E', préférentiellement inférieure ou égale à la moitié de la première accélération de référence $\gamma^{reference1}$ ;

o Déterminer $N'^{U2}$ comme le nombre de points du premier signal, ramené à un tour de roue,

o entre les incréments $K_1$ et $K_{N2+1}$ par la formule : o o

[Math 6]

$$N'^{U2} = \frac{\left(u_{K_{N2+1}} - u_{K_1}\right)}{N2} * N2$$

;

o ou situé entre les incréments $K_1$ et $K_{N2+2}$ par la formule : o o

[Math 7]

$$N'^{U2} = \frac{\left(u_{K_{N2+2}} - u_{K_1}\right)}{N2+1} * N2$$

.

Dans ce second mode de réalisation, on se sert de l'information sur le premier signal tour de roue $Sig^{TdR1}$ pour construire le second signal tour de roue $Sig^{TdR2}$. En effet, on extrait de la première phase, la période $T_1$ du premier signal tour de roue $Sig^{TdR1}$. Ensuite, on délimite sur le premier signal un second signal tour de roue $Sig^{TdR2}$ comme un multiple N2 de la période $T_1$ en prenant un premier incrément quelconque de ce premier signal situé entre le quart et les trois quarts du premier tour de roue après la fin du premier signal tour de roue $Sig^{TdR1}$. La durée de ce second signal est alors $t_2$. Ainsi, le signal de la deuxième phase est situé aussi proche que possible de la fin du premier signal tour de roue $Sig^{TdR1}$. Cela permet de minimiser la variation de vitesse de rotation W de l'enveloppe pneumatique entre les deux signaux tour de roue $Sig^{TdR1}$ et $Sig^{TdR2}$. De plus, l'ensemble des points situés entre le quart et les trois quarts du tour de roue délimité par les fronts représentatifs de l'aire de contact assure de délimiter le second signal tour de roue $Sig^{TdR2}$ dans des zones où le premier signal évolue peu. De plus, l'amplitude est proche de la valeur moyenne sur la durée du second signal tour de roue $Sig^{TaR2}$. Cela permet de minimiser les erreurs liées à la discrétisation du second signal tour de roue $Sig^{TdR2}$.

On fait alors l'hypothèse que le nombre de tours de roue de ce second signal tour de roue $Sig^{TdR2}$ correspond au multiple N2 employé. On construit une série d'incréments K à partir des abscisses u du premier signal dont la première abscisse correspond à l'abscisse u ayant servi à délimiter la fin du premier signal tour de roue $Sig^{TdR1}$. Ces incréments K sont identifiés quand le premier signal passe eu dessus ou en dessous d'un seuil E'. Préférentiellement ce seuil E' est inférieur à la moitié de la première accélération de référence $\gamma^{reference1}$. Enfin, on détermine une valeur $N^{U2}$ qui correspond au nombre du premier signal situés entre deux incréments K particuliers. Cela permet de prendre en compte une éventuelle variation de la vitesse de rotation W de l'enveloppe pneumatique entre les deux phases de la méthode.

Avantageusement, le seuil A pour définir la première densité d'énergie est fonction de la première accélération de référence $\gamma^{reference1}$.

Le seuil A permet de dissocier les densités d'énergie positif et négatif de la méthode.

En effet, tout signal de mesure est bruité. Il est possible de filtrer, ou lisser ce signal en temps réel, mais au risque de perdre de l'information, notamment la dynamique du passage dans l'aire de contact. Par définition, ce bruit est de valeur moyenne sensiblement nulle. Et si, en théorie, il ne doit pas ou peu affecter le calcul des densités d'énergie $S^+$ et $S^-$, il est susceptible de perturber la classification dans $S^+$ ou $S^-$, et donc fausser le résultat final. Ce seuil A a pour objectif de permettre de ranger les variations entre le signal de tour de roue et l'accélération de référence selon l'une ou l'autre des densités d'énergie, en tenant compte des variations du signal de tour de roue dues à des perturbations et un mauvais rapport signal/bruit, ces perturbations pouvant provenir de la macrorugosité de la route, d'obstacles ponctuels rencontrés sur la route, des vibrations propres au pneumatique ou au véhicule sur lequel il est monté, ou des petits dysfonctionnements électromagnétiques de la chaîne de mesure inhérents à la nature et la qualité des composants électroniques utilisés. Comme le signal tour de roue et l'accélération de référence dépendent de la vitesse de rotation W de l'ensemble monté et de la position radiale du capteur, il semble opportun de rendre dépendant la valeur seuil A de la première accélération de référence $\gamma^{reference1}$ qui vient d'être évaluée lors de la première phase de la méthode pour s'affranchir de ces perturbations qui pourrait polluer la précision souhaitée.

Très avantageusement, le seuil A est fonction d'un facteur C selon la formule suivante :

[Math 8]

$$A = C * \gamma^{reference1}$$

Préférentiellement, le facteur C est supérieur ou égal à 0,5 et inférieur ou égal à 0,9.

Cette valeur du facteur C permet à la fois de dissocier la densité d'énergie positive et négative sur le signal tour de roue. En effet, lors du passage dans l'aire de contact, le signal tour de roue tend vers zéro. De plus, la transition au niveau de l'entrée et la sortie de l'aire de contact est très forte, très rapide et d'un profil toujours sensiblement identique. Ainsi, une valeur de 0,5 permet de ne pas trop diminuer le nombre de points de mesure qui seront affectés à la densité d'énergie négative $S^-$ ou augmenter ceux qui sont affectés à $S^+$. En effet, l'objectif de la méthode est d'employer une discrétisation spatiale peu élevée. Généralement, peu de points de mesure sont situées au niveau de la zone de transition. De ce fait, l'erreur commise sur $S^-$ et sur $S^+$ est minime voire nulle si aucun point de mesure ne se trouve dans la zone de sélection correspondante à C entre 0,5 et 0,9. Elle sera en outre répétitive si on utilise un coefficient C figé proportionnel à $\gamma^{reference1}$ pour toutes les caractérisations, et l'erreur éventuellement induite sera reproductible donc transparente par rapport à un niveau de référence défini par ailleurs.

A l'inverse, une valeur de C égale à 1,0 est la valeur théorique qui permet de dissocier les points entre les deux densités d'énergie possibles. Si cela est idéal sur des sols lisses avec des conditions optimales minimisant les perturbations sur la chaîne de mesure. La moindre perturbation peut impacter la précision requise sur le résultat.

Préférentiellement, ayant phasé le second signal tour de roue $Sig^{TaR2}$ par rapport à une position angulaire de l'enveloppe pneumatique, une correction Corr est apportée au second signal tour de roue $Sig^{TaR2}$ pour prendre en compte l'effet de la gravité terrestre.

La correction de la gravité terrestre permet de minimiser l'erreur sur la déformation de l'enveloppe pneumatique en particulier pour les vitesses de roulage W basses. En effet, le capteur, lors du roulage de l'enveloppe pneumatique, fait une révolution autour de l'axe naturel de rotation de l'enveloppe pneumatique. Le signal de sortie du capteur étant proportionnel à l'accélération radiale sera pollué par la gravité terrestre. Sur un tour de roue, la gravité terrestre va générer un signal sinusoïdal d'amplitude g qui est fonction de l'altitude du capteur dans le repère de la Terre. Il faut donc retirer ce signal parasite Corr du second signal tour de roue $Sig^{TdR2}$ ce qui nécessite un recalage du second signal tour de roue par rapport à une position angulaire de l'enveloppe pneumatique.

Bien entendu, plus la vitesse de rotation W de l'enveloppe pneumatique est élevée, plus l'accélération centrifuge subie par le capteur devient prédominant par rapport à ce signal parasite.

Selon un mode de réalisation particulier, l'identification de la déformation de l'enveloppe pneumatique $Def_\%$ comprend les étapes suivantes

- Lors de la deuxième phase ;

- Déterminer une deuxième accélération de référence $\gamma^{reference2}$ associée deuxième signal tour de roue $Sig^{TdR2}$, celle-ci est définie comme la valeur moyenne du deuxième signal tour de roue $Sig^{TdR2}$ ramenée à un tour de roue selon la formule suivante :

[Math 9]

$$\gamma^{reference2} = \frac{\left( \sum_{Sig^{TdR2}} Sig^{TdR2} \right)}{N^{U2}}$$

;
- Identifier une valeur O comme étant la valeur $N^{U2}$ sauf si $N'^{U2}$ existe alors la valeur O est $N'^{U2}$ ;
- Identifier la déformation de l'enveloppe pneumatique $Def_\%$ générée par la charge selon l'une des formules suivantes :

[Math 10a]

$$Def_\% = \frac{N^{U1}}{O} * \frac{\left[ S^+ + \left( \gamma^{reference1} - \gamma^{reference2} \right) \times N^{TdR2} \right]}{\left( N^{TdR2} \times \gamma^{reference1} \right)}$$

, ou

[Math 10b]

$$Def_\% = \frac{N^{U1}}{O} * \frac{\left( S^- \right)}{\left( N^{TdR2} \times \gamma^{reference1} \right)}$$

, ou

[Math 10c]

$$Def_\% = \frac{N^{U1}}{O} * \frac{\left[ S^+ + S^- + \left( \gamma^{reference1} - \gamma^{reference2} \right) \times N^{TdR2} \right]}{2 \times \left( N^{TdR2} \times \gamma^{reference1} \right)}$$

.

Ces formulations construites sur la densité d'énergie positive ou la densité d'énergie négative ou les deux permettent de corriger la déformation de l'enveloppe pneumatique en prenant en compte la variation de la vitesse de rotation W de l'enveloppe pneumatique entre les deux phases de la méthode.

De plus, les opérations sont élémentaires à la fin de la deuxième phase de la méthode où toutes les grandeurs intermédiaires ont été identifiées. Cependant, selon le mode de réalisation choisi pour délimiter le second signal tour de roue $Sig^{TdR2}$ à partir du premier signal, il convient de préciser une valeur O entre les valeurs $N^{U2}$ et $N'^{U2}$.

La méthode prend en compte à la fois, la modification du nombre de points entre le premier signal tour de roue et le second signal tour de roue du fait d'un changement de fréquence d'échantillonnage et d'un changement de vitesse de rotation W de l'enveloppe pneumatique.

De plus, la méthode prend aussi en compte l'erreur commise lors de la seconde phase lorsque les densités d'énergie sont évaluées par rapport à la première accélération de référence $\gamma^{reference1}$ et non pas la seconde accélération de référence $\gamma^{reference2}$.

Ainsi, cette méthode permet d'évaluer la deuxième accélération de référence $\gamma^{reference2}$ à partir du second signal tour de roue $Sig^{TaR2}$ qui a été construit. Cette évaluation ne fait que sommer les incréments de valeur du premier signal entre les deux bornes du second signal tour de roue. Lorsque la seconde borne est atteinte, il ne suffit plus qu'à diviser la somme par le nombre total d'incréments ayant servi à constituer la somme. Cette méthode est économe en espace mémoire et en ressource énergétique du dispositif électronique comprenant le capteur de la méthode.

Préférentiellement, le nombre de tour de roue $N^{TdR2}$ du deuxième signal tour de roue $Sig^{TdR2}$ est la valeur unité.

La méthode est exacte des qu'un tour de roue a servi à évaluer les diverses grandeurs. Afin d'économiser de la ressource énergétique et de la mémoire, il est judicieux de déployer la seconde phase de la méthode sur un unique tour de roue.. De plus, si la vitesse de rotation W est variable, plus la seconde phase sera courte, moins la variabilité de la vitesse de rotation W sera importante, plus l'évaluation de la déformation de l'enveloppe pneumatique $Def_\%$ sera précise.

Très préférentiellement, le nombre de tour de roue $N^{TdR1}$ du premier signal tour de roue $Sig^{TdR1}$ est la valeur unité.

La méthode est exacte dès qu'un tour de roue a servi à évaluer les diverses grandeurs. Bien que les calculs effectués lors de la première phase de l'analyse soient moins nombreux, dans le but d'économiser de la ressource énergétique et de la mémoire au niveau du dispositif électronique, il est judicieux de déployer la première phase de la méthode sur un unique tour de roue. De plus, si la vitesse de rotation W est variable, plus la première phase de la méthode sera courte, moins la variabilité de la vitesse de rotation W sera importante, plus l'évaluation de la déformation de l'enveloppe pneumatique $Def_\%$ sera précise.

Avantageusement, ayant effectué $N_i$, évaluations, préférentiellement $N_i$ est un nombre entier compris entre 3 et 10, très préférentiellement 5, de la déformation de l'enveloppe pneumatique $Def_\%$ sur différents premiers et deuxièmes signaux tour de roue $Sig_i^{TdR1}$ et $Sig_i^{TdR2}$ sur le même premier signal, la déformation de l'enveloppe pneumatique $Def_\%$ est la moyenne des déformations de l'enveloppe pneumatique $Def^i_\%$ selon la formule suivante :

[Math 11]

$$Def_{\%} = \frac{\sum_i Def_{\%}^i}{N_i}$$

Afin de rendre robuste l'évaluation de la déformation de l'enveloppe pneumatique lors du roulage à la vitesse de rotation W lorsque le premier signal est émis par le capteur, il est judicieux de faire plusieurs évaluations de la déformation de l'enveloppe pneumatique $Def_{\%}^i$. Chacune de ses évaluations peut être entachée d'une erreur en raison de facteurs extérieurs à l'ensemble monté comme par exemple des défauts sur la chaussée. Alors, effectuer la moyenne de ces divers évaluations permet de rendre robuste l'identification de la vraie déformation de l'enveloppe pneumatique $Def_{\%}$.

Selon un mode de réalisation privilégié, les Ni évaluations sont faites successivement de sorte que la deuxième phase de l'évaluation Ni soit la première phase de l'évaluation Ni+1.

Et d'autant plus que si ces évaluations se succèdent les unes derrière les autres en ne prenant en compte qu'un seul tour de roue lors de chaque phase. Alors, la seconde phase de l'itération précédente devient la première phase de l'itération actuelle. Ainsi, la détermination de la déformation de l'enveloppe pneumatique s'effectue sur un nombre minimum de tours de roue et l'évaluation de l'accélération de référence lors de la deuxième phase d'une itération sert pour l'itération suivante. Ainsi, on a une mutualisation des opérations mathématiques et logiques. Cela est peu coûteux en espace mémoire et en ressource énergétique pour une évaluation robuste.

## Description brève des dessins

L'invention sera mieux comprise à la lecture de la description qui va suivre dans le cas d'une application à des bandages pneumatiques. Cette application est donnée uniquement à titre d'exemple et faite en se référant aux figures annexées dans lesquelles :

- La Fig 1 est l'exemple d'un premier signal de la méthode.
- La Fig 2 présente le premier signal tour de roue $Sig^{TdR1}$ et son identification à partir du premier signal.
- La Fig 3 représente le second signal tour de roue $Sig^{TDR2}$ et son identification avec un premier mode de réalisation.
- La Fig 4 représente le second signal tour de roue $Sig^{TaR2}$ et son identification avec un autre mode de réalisation.
- La Fig 5 représente le premier et second signal tour de roue $Sig^{TdR1}$ et $Sig^{TdR2}$ lors d'un roulage à vitesse de rotation W variable.
- La Fig 6 représente le second signal tour de roue $Sig^{TdR2}$ lors d'un roulage à vitesse de rotation W constante sur un tour.

## Description détaillée de modes de réalisation

Pour la mise en oeuvre de l'invention, il faut équiper une enveloppe pneumatique d'un organe électronique comprenant un capteur, un microcontrôleur, une horloge, un espace mémoire et un moyen de stockage d'énergie, et des moyens de communications Radio Fréquence en émission et éventuellement en réception. L'enveloppe pneumatique comprend un sommet, deux flancs et deux bourrelets de révolution autour d'un axe naturel de rotation. L'enveloppe comprend aussi un plan médian équidistant des deux bourrelets, l'intersection du plan médian et de l'axe naturel de rotation définissant un centre roue.

Le capteur est fixé sur l'enveloppe pneumatique au droit du sommet, au droit d'un rib ou d'un sillon longitudinal qui sont des zones de rigidité homogène, à une position radiale R fixe par rapport à l'axe naturel de rotation. Le capteur est apte à générer au moins un signal de sortie proportionnel à l'accélération normale au sommet subie par le capteur dans l'enveloppe pneumatique. En fait, ce capteur peut être monoaxe, auquel cas, il faut le positionner de façon radiale. Il peut aussi être aussi constitué d'une pluralité de capteurs monoaxes. Dans ce cas, il convient de bien identifier l'orientation de chacun des capteurs monoaxes par rapport au repère de l'enveloppe pneumatique afin de reconstruire l'accélération normale au sommet de l'enveloppe pneumatique. Idéalement, le capteur prend en compte la composante continue et la composante alternative de l'accélération. Dans le cas où seule la composante alternative est mesurée par le capteur, il conviendra pour la mise en oeuvre de la méthode de construire artificiellement la composante continue. Pour cela, il faut alors identifier la vitesse de rotation W de l'enveloppe pneumatique en temps réel et connaitre avec précision la position radiale R du capteur. En effet, la composante continue sera évaluée comme l'accélération centrifuge du capteur par rapport à l'axe naturel de rotation de l'enveloppe pneumatique. Le capteur dans le cas de la prise en compte de la composante continue peut être un accéléromètre de technologie piezorésistive ou capacitive.

L'organe électronique est alimenté par le moyen de stockage d'énergie, est piloté par le microcontrôleur à l'aide l'horloge et dans lequel sont aussi implantés les algorithmes de calcul qui permettent de déterminer par exemple l'état de déformation du pneumatique en utilisant les signaux issus de l'élément capteur. Les moyens de communication RF d'émission servent à transmettre les informations calculées, et ceux de réception de recevoir des instructions de fonctionnement ou des informations utiles dans les algorithmes de calcul. Idéalement, cet organe électronique comprends ou est associé d'autres éléments de mesures (tels que pression, température, niveau d'usure, distance parcourue, etc...) afin de mutualiser les organes et optimiser les coûts de mise en oeuvre.

Ici, le capteur est mis en route par l'intermédiaire du microcontrôleur lorsque l'enveloppe pneumatique est en condition de roulage. Bien entendu, on peut sélectionner une valeur seuil de vitesse de rotation W à partir de laquelle l'acquisition d'un signal en sortie du capteur est effectuée. L'organe électronique dispose d'un espace mémoire adaptée au type d'analyse que l'on souhaite effectuer. En fait la capacité de cet espace mémoire est prédéfinie selon l'usage de l'organe électronique. C'est le microcontrôleur qui pilote le rangement des valeurs du capteur vers l'espace mémoire. De plus, le microcontrôleur est apte à effectuer des opérations mathématiques et logiques élémentaires sur un nombre de données réduites. Si, les opérations mathématiques et logiques sont plus complexes ou que le nombre de données à manipuler devient conséquent, le microcontrôleur est remplacé par un microprocesseur. Enfin l'organe électronique est alimenté en énergie par un moyen de stockage. Le plus simple comme moyen de stockage est l'utilisation d'une batterie. Cependant, une capacité de grande dimension rechargeable à l'aide d'un élément piezo électrique pourrait être envisagée

La gamme de fréquence de l'organe électronique permet de couvrir une large bande de vitesse de rotation W avec une discrétisation spatiale de moins 6 degrés. Selon un mode de réalisation particulier, la fréquence d'échantillonnage est adaptative sur commande ou en réponse à un signal comme par exemple la vitesse de rotation W de l'enveloppe pneumatique.

De façon optionnelle, l'organe électronique contient ou et apte à obtenir l'identification de l'enveloppe pneumatique. Cette information est utile pour choisir un set de données utiles pour les algorithmes de calculs au niveau de l'organe électronique. Si, l'organe électronique doit obtenir l'identification du pneumatique ou recevoir des commandes pour effectuer une mesure, l'organe électronique est équipé d'un moyen de réception radiofréquence. Celui-ci fonctionne dans la gamme des basses fréquences, idéalement à la fréquence de 125KHz afin de s'affranchir des perturbations générées par les zones métalliques de l'enveloppe pneumatique et de son environnement proche dans le véhicule.

Selon un mode de réalisation spécifique, l'organe électronique dispose de moyens d'émission radiofréquence, spécifiquement dans la bande UHF (acronyme de Ultra Hautes fréquences), en particulier aux alentours de 433MHZ ou 900MHz ou la bande dite BLE (acronyme en anglais de Bluetooth Low Emission) qui constituent des bandes de fréquences libres. De plus, la bande des UHF permet d'avoir des tailles d'antenne réduites facilitant l'intégration de l'organe électronique au sein de l'enveloppe pneumatique.

Cette communication en émission est utile pour transmettre les données de la méthode vers le véhicule ou l'extérieur du véhicule. Il est possible soit d'émettre le train de données correspondant à l'acquisition du signal tour de roue ou de transmettre des résultats intermédiaires qui auront été calculés au niveau de l'organe électronique. Ce second mode d'émission est nécessairement moins coûteux en énergie pour l'organe électronique puisque le flux de données est moins conséquent. Or, l'émission radiofréquence est un poste consommateur en énergie par rapport à des opérations mathématiques et logiques.

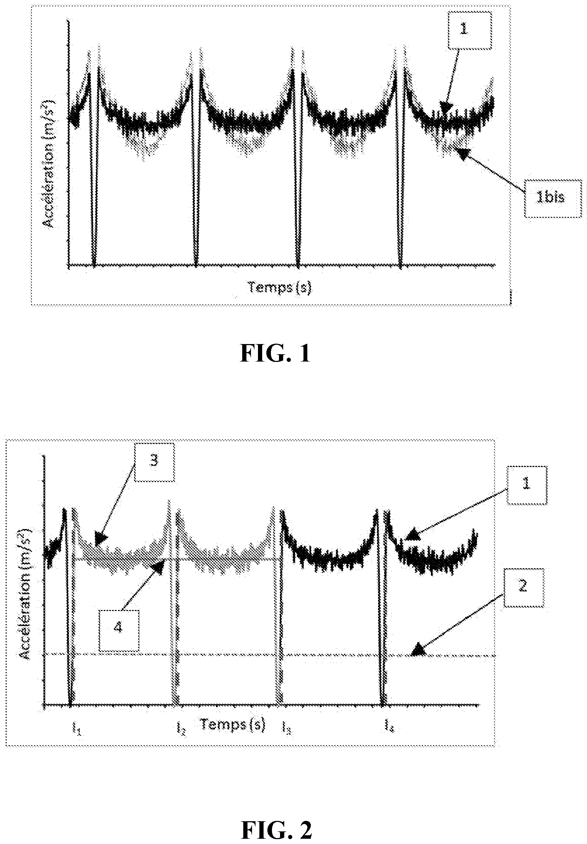

La figure 1 présente un premier signal 1bis brut en gris correspondant à l'accélération normale au sommet d'une enveloppe pneumatique de type poids lourd roulant à une vitesse de rotation W constante. Régulièrement, de façon périodique, la courbe 1bis passe par une valeur quasi nulle. Ce phénomène périodique correspond à la traversée de l'aire de contact de l'enveloppe pneumatique par le capteur. La transition entre le passage du capteur entre l'aire de contact du pneumatique et l'autre partie de l'enveloppe pneumatique s'effectue brutalement au travers de fronts descendants ou montants selon que l'on soit à l'entrée ou la sortie de l'aire de contact. De plus, on note que le premier signal 1bis à une échelle de l'ordre du tour de roue suit une porteuse, le premier signal 1bis oscille à une fréquence plus élevée que la fréquence du tour de roue autour de cette porteuse. Ces oscillations correspondent aux bruits du premier signal 1bis du capteur dus aux divers aléas dont la macrorugosité de la route.

La courbe indexée 1 en noir, représente le même signal accélérométrique corrigé seulement de la gravité terrestre que l'on nommera premier signal corrigé 1. La correction est ici sinusoïdale en ayant phasé la correction sur un point situé au centre de l'aire de contact, c'est-à-dire à égal distance des deux fronts délimitant la partie du signal dont la valeur est quasi nulle. On observe que le premier signal 1 est plus plat entre les zones caractérisant l'aire de contact. Il est préférable d'effectuer les diverses étapes de la méthode sur ce premier signal corrigé1.

La figure 2 présente la méthode de détection du premier signal tour de roue 3. A partir du premier signal 1, ici corrigé pour mieux expliciter l'exemple, on détermine un seuil E, illustré par la ligne pointillée 2. On identifie une série d'incréments I lorsque que le premier signal 1 franchit la ligne pointillée 2 par exemple par le dessous ce qui correspond physiquement à une sortie de l'aire de contact par le capteur lié solidairement en rotation à l'enveloppe pneumatique. On délimite alors le premier signal tour de roue 3 entre un premier incrément, ici $I_1$, et un second incrément, ici $I_3$. Le

signal tour de roue représente ici le signal accélérométrique du capteur sur deux tours de roue complets.

La valeur seuil E représentée par la ligne pointillée 2 a été évaluée dans notre cas sur une partie du premier signal 1 avec une fréquence d'échantillonnage variable. On extrait sur cette partie du premier signal 1, la valeur maximale discrétisée obtenue que l'on nomme MAX. La valeur seuil E est alors une valeur comprise entre 10 et 50% de la valeur MAX, dans notre cas, cette valeur est d'environ 20%.

On calcule comme la valeur moyenne du premier signal tour de roue 3, la première accélération de référence $\gamma^{reference1}$ qui est représentée par la ligne continue 4 en noir Son évaluation est faite en temps réel, en cumulant les valeurs des incréments u du premier signal tour de roue que l'on, divise à la fin du signal tour de roue par le nombre d'incréments du premier signal tour de roue.

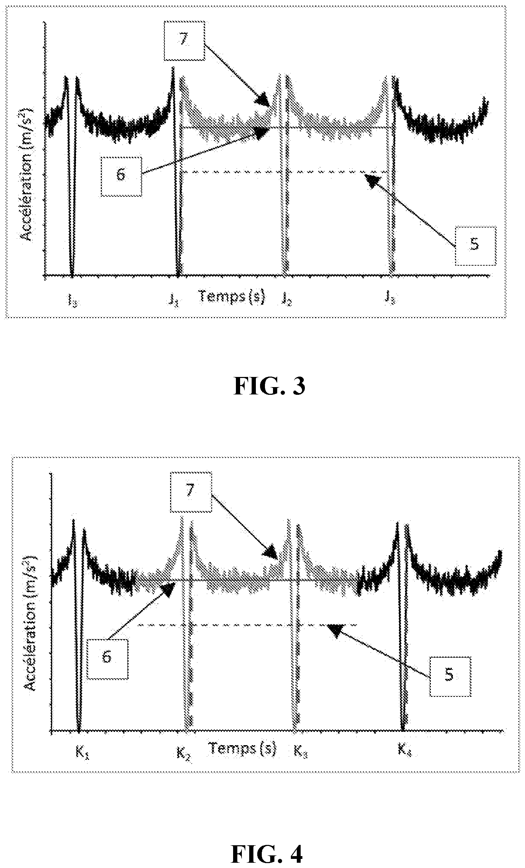

La figure 3 est une illustration de la délimitation du second signal tour de roue 7 en gris clair à partir du premier signal. Ce second signal tour de roue 7 est postérieur au premier signal tour de roue qui s'est terminé à l'incrément $I_3$. Ici, c'est le premier mode de réalisation de cette délimitation qui est employé.

A partir de la première accélération de référence $\gamma^{reference1}$ illustrée par la courbe continue 4 sur la figure précédente, on détermine une valeur seuil E' située, dans notre cas, à la moitié de la première accélération de référence $\gamma^{reference1}$. On identifie alors une série d'incréments J sur le premier signal correspondant au franchissement du premier signal par rapport à cette valeur seuil E'. Dans l'illustration, on a pris que le franchissement par le dessous de ce seuil E' pour identifier les incréments J. On aurait pu prendre les incréments correspondant au franchissement par le dessus du seuil E'. Ce seuil E' est illustré par la ligne pointillée 5. On délimite alors le second signal tour de roue 7 en gris à l'aide d'un premier incrément, ici Ji, et d'un second incrément, ici $J_3$. Ce second signal tour de roue 7 correspond à un nombre fini de tours de roue, ici 2, aux erreurs de discrétisation prés.

On calcul la seconde accélération de référence $\gamma^{reference2}$ illustrée par la ligne continue 6 comme la valeur moyenne du second signal tour de roue 7, de la même manière que précédemment pour $\gamma^{reference1}$. Cela permet d'effectuer le calcul en temps réel au niveau de l'organe électronique comprenant le capteur en minimisant les ressources mémoires et énergétiques de l'organe électronique.

La figure 4 est une illustration de la délimitation du second signal tour de roue 7 en gris à partir du premier signal. Ce second signal tour de roue 7 est postérieur au premier signal tour de roue qui s'est terminé à l'incrément $I_3$. qui est ici l'incrément $K_1$. Ici, c'est le second mode de réalisation de cette délimitation qui est employé.

A partir du premier signal tour de roue, il est possible de calculer la période T du premier signal ramené à un tour de roue. Ensuite, on identifie le premier incrément u du premier signal qui se situe entre le quart et les trois quarts de la période T située après la fin du premier signal tour de roue délimité par l'incrément K1. Dans l'illustration de la figure 4, on a choisi arbitrairement que le second signal tour de roue commence peu après la moitié de la période. Cela correspond physiquement à l'instant où le capteur se situe à l'opposé de l'aire de contact définie par l'enveloppe pneumatique lors de sa rotation solidaire avec l'enveloppe pneumatique.

On construit alors un second signal tour de roue 7 en gris sur une durée t correspondant à un multiple entier de la période T. Le premier incrément u du premier signal situé après la durée t de ce second signal tour de roue 7 ne sera pas pris dans le second signal tour de roue 7.

A partir de ce second signal tour de roue 7, on détermine une seconde accélération de référence $\gamma^{reference2}$ comme la valeur moyenne de ce second signal tour de roue, représentée par la ligne continue 6.

Par ailleurs, on définit à partir du dernier incrément u ayant servi à délimiter le premier signal tour de roue, une série d'incrément K. Le premier incrément $K_1$ correspond au dernier incrément u ayant servi à délimiter la fin du premier signal tour de roue. Les autres incréments K sont calculées à l'aide d'un seuil E' représentée par la ligne pointillée 5 qui sera inférieure ou égale à la moitié de la première accélération de référence $\gamma^{reference1}$ défini sur le premier signal tour de roue. Ces incréments permettent d'identifier le nombre d'incrément $N^{'U2}$.

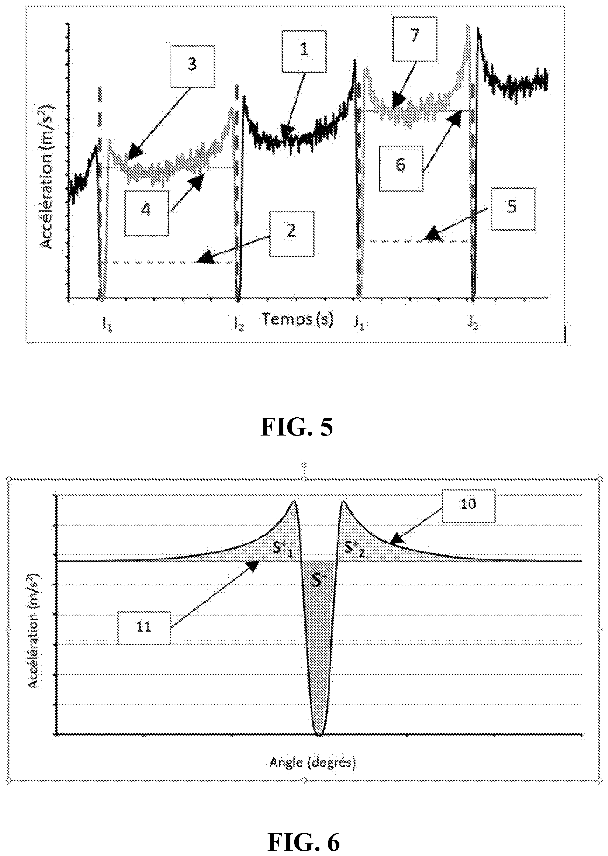

La figure 5 présente un premier signal 1, préalablement corrigé de la gravité terrestre correspondant à l'accélération normale au sommet d'une enveloppe pneumatique de type poids lourd roulant à une vitesse de rotation W variable.

Ici, on détermine des seuils E et E', représentées par les lignes pointillées 2 et 5, respectivement pour le premier signal tour de roue 3 en gris et le second signal tour de roue 7 en gris clair.

Le premier seuil E permet d'identifier les incréments I correspondant par exemple à la sortie de l'aire de contact par le capteur. Dans cette analyse, le premier signal tour de roue est limité à un tour de roue ce qui est préférentiel pour limiter les erreurs liées à la variation de la vitesse de rotation W de l'enveloppe pneumatique. Le seuil E a été choisi afin qu'il corresponde à la moitié de l'accélération de référence du premier signal délimité sur un nombre entier de tour de roue effectuée avant le premier signal tour de roue 3. On calcule aussi, sur ce premier signal tour de roue 3, la première accélération de référence $\gamma^{reference1}$ comme la valeur moyenne de ce premier signal tour de roue, illustré par la courbe continue 4.

Le seuil E' pour délimiter le second signal tour de roue 7 correspond ici à la moitié de la première accélération de référence $\gamma^{reference1}$ du premier signal tour de roue. On délimite le second signal tour de roue, à l'aide de ces fronts sur un unique tour de roue. On évalue sur ce second signal tour de roue 7, la seconde accélération de référence $\gamma^{reference2}$

comme la valeur moyenne de ce second signal tour de roue 7, représentée par la courbe continue 6.

On notera aussi que du fait de la vitesse de rotation W variable ici en phase d'accélération, le nombre d'incréments $N^{U1}$ et $N^{U2}$ entre le premier et le second signal tour de roue 3 et 7 diminuent sensiblement.

La figure 6 est une illustration pour expliciter le calcul des densités d'énergie positive $S^+$ et négative $S^-$ sur un second signal tour de roue 10 correspond à un seul tour de roue lorsque la vitesse de rotation W est constante. Bien entendu, la méthode est identique si la vitesse de rotation W est variable ou que le signal tour de roue est délimité sur plusieurs tour de roue.

On détermine le seuil A comme étant ici le produit d'une valeur C, ici égale à 1,0 , par la première accélération de référence $\gamma^{reference1}$ identifié sur le premier signal tour de roue. Ce seuil est matérialisé par la ligne continue 11. En fait, il est préférable sur des signaux réels de prendre une valeur de C égal à 0,7. Si les signaux sont fortement perturbés, on peut choisir une valeur de C égal à 0,5 ou 0,6. En revanche, pour des signaux obtenus sur des chaussées globalement lisses, une valeur de C de l'ordre de 0,8 ou 0,9 peut être employée. Il faut que cette valeur C soit figée pour toutes les étapes de la méthode.

On calcule les densités d'énergie positive $S^+$ ou négative $S^-$ comme la sommation des valeurs absolues des différences entre le second signal tour de roue 10 et la première accélération de référence $\gamma^{reference1}$, représentée par la courbe continue 11. Nécessairement, la surface délimitée par les surfaces $S^+$ est égale à la surface délimitée par la surface $S^-$ aux erreurs de discrétisation prés.

## Revendications

1. Méthode d'obtention de la déformation d'une enveloppe pneumatique soumise à une charge, dans un état gonflé et chargé tournant à une vitesse de rotation W, la dite enveloppe pneumatique ayant un sommet, deux flancs et deux bourrelets de révolution autour d'un axe naturel de rotation et un plan médian, l'intersection du plan médian et de l'axe naturel de rotation définissant un centre roue, comprenant les étapes suivantes :

   - Fixer au moins un capteur sur l'enveloppe pneumatique au droit du sommet ayant une position radiale R par rapport à l'axe naturel de rotation apte à générer au moins un signal de sortie proportionnel à l'accélération subie par ledit capteur dans l'enveloppe pneumatique;
   - Réaliser l'acquisition d'un premier signal d'abscisse u comprenant au moins l'amplitude de l'accélération selon la direction normale au sommet lors d'un roulage à la vitesse de rotation W, à une fréquence d'échantillonnage fe dont la discrétisation spatiale est inférieure à 6 degrés, préférentiellement inférieure à 3 degrés, très préférentiellement inférieure à 1 degré ;
   - Lors d'une première phase :
   - Figer une première fréquence d'échantillonnage fe1 constante ;
   - Délimiter le premier signal sur un nombre entier $N^{TdR1}$ de tours de roue, $N^{TdR1}$ étant supérieur ou égale à 1, afin de construire un premier signal tour de roue $Sig^{TdR1}$;
   - Déterminer une première accélération de référence $\gamma^{reference1}$ comme la valeur moyenne du signal tour de roue $Sig^{TdR1}$ ramené à un tour de roue selon la formule suivante :

[Math 1]

$$\gamma^{reference1} = \frac{\left( \sum_{Sig^{TdR1}} Sig^{TdR1} \right)}{N^{U1}}$$

   - où $N^{U1}$ est le nombre de points de $Sig^{TdR1}$
   - Lors d'une seconde phase :
   - Figer une deuxième fréquence d'échantillonnage fe2 constante ;
   - Délimiter le premier signal sur un nombre entier $N^{TdR2}$ de tours de roue, $N^{TdR2}$ étant supérieur ou égal à 1, afin de construire un second signal tour de roue SigTdR2;
   - Définir au moins une première densité d'énergie S qui est fonction du second signal tour de roue $Sig^{TdR2}$, de l'accélération de référence $\gamma^{reference1}$, nommée $S^+$ lorsque le signal tour de roue est supérieur à un seuil A, ou nommée $S^-$ lorsque le signal tour de roue est inférieure ou égale audit seuil A selon les formules suivantes :

[Math 2a]

$$S^+ = \left[\sum_{Sig^{TdR2} > A}(Sig^{TdR2} - \gamma^{Reference1})\right] * \frac{N^{TdR2}}{N^{U2}}$$

; et

[Math 2b]

$$S^- = \left|\sum_{Sig^{TdR2} \leq A}(Sig^{TdR2} - \gamma^{Reference1})\right| * \frac{N^{TdR2}}{N^{U2}}$$

,

- Où $N^{U2}$ est le nombre de points de $Sig^{TdR2}$

- Identifier la déformation de l'enveloppe pneumatique $Def_\%$ générée par la charge comme une fonction de l'accélération de référence $\gamma^{reference1}$ et de la première densité d'énergie S selon l'une des formules suivantes :

[Math 3a]

$$Def_\% = \frac{N^{U1}}{N^{U2}} * \frac{\left|\sum_{Sig^{TdR2} > A}(Sig^{TdR2} - \gamma^{Reference1})\right|}{\left(\sum_{Sig^{TdR1}} Sig^{TdR1}\right)}$$

, ou

[Math 3b]

$$Def_\% = \frac{N^{U1}}{N^{U2}} * \frac{\left|\sum_{Signal^{TdR2} \leq A}(Sig^{TdR2} - \gamma^{Reference1})\right|}{\left(\sum_{Sig^{TdR1}} Sig^{TdR1}\right)}$$

, ou

[Math 3c]

$$Def_\% = \frac{N^{U1}}{N^{U2}} * \frac{\left|\sum_{Sig^{TdR2} > A}(Sig^{TdR2} - \gamma^{Reference1})\right| + \left|\sum_{Sig^{TdR2} \leq A}(Sig^{TdR2} - \gamma^{Reference1})\right|}{2 * \left(\sum_{Sig^{TdR1}} Sig^{TdR1}\right)}$$

.

2. Méthode d'obtention de la déformation d'une enveloppe pneumatique selon la revendication 1 dans laquelle, l'acquisition du premier signal est effectuée pour une vitesse de rotation W supérieure ou égale à une vitesse de rotation seuil $W_{seuil}$ définie par la formule suivante :

[Math 4]

$$W_{seuil} = \frac{12}{\sqrt{Dev}}$$

- où Dev est le développement de l'enveloppe pneumatique.

3. Méthode d'obtention de la déformation d'une enveloppe pneumatique selon l'une des revendications 1 à 2 dans laquelle la délimitation du premier signal sur un nombre $N^{TdR1}$ comprend les étapes suivantes :

- Lors de la première phase :

- Identifier une première série des incréments I, correspondant à l'abscisse u du premier signal où le premier signal passe au-dessus ou en dessous d'une valeur seuil E.

- Délimiter le premier signal entre un premier incrément $I_{min}$ et un second incrément $I_{max}$ afin de construire un premier signal tour de roue $Sig^{TdR1}$ ;
- Déterminer le nombre de tours de roue $N^{TdR1}$ comme la différence $I_{max}$ moins $I_{min}$ ;

4. Méthode d'obtention de la déformation d'une enveloppe pneumatique selon la revendication 3 dans laquelle l'identification du seuil E comprend les étapes suivantes :

- Avant la première phase :

  - Fixer une fréquence d'échantillonnage fe0 sur une première partie du premier signal ;
  - Identifier la valeur maximale MAX sur la première partie du premier signal;
  - Définir une valeur seuil E qui est fonction de la valeur MAX; préférentiellement E est compris entre 10% et 50% de MAX

5. Méthode d'obtention de la déformation d'une enveloppe pneumatique selon l'une des revendications 1 à 4 dans laquelle la délimitation du premier signal sur un nombre $N^{TdR2}$ comprend les étapes suivantes :

- Lors de la deuxième phase :

  - Identifier une première série des incréments J, correspondant à l'abscisse u du premier signal où le premier signal passe au-dessus ou en dessous d'une valeur seuil E', préférentiellement inférieure ou égale à la moitié de la première accélération de référence $\gamma^{reference1}$ ;
  - Délimiter le premier signal entre un premier incrément $J_{min}$ et un second incrément $J_{max}$ afin de construire un second signal tour de roue $Sig^{TdR2}$ ;
  - Déterminer le nombre de tours de roue $N^{TdR2}$ comme la différence $J_{max}$ moins $J_{min}$ ;

6. Méthode d'obtention de la déformation d'une enveloppe pneumatique selon l'une des revendications 1 à 4 dans laquelle la délimitation du premier signal sur un nombre $N^{TdR2}$ comprend les étapes suivantes :

- Lors de la première phase :

  - Identifier la période $T_1$ selon la formule suivante :

[Math 5]

$$T_1 = \frac{N^{U1}}{fe1 * N^{TaR1}}$$

- Lors de la deuxième phase ;

  - Construire un second signal tour de roue $Sig^{TdR2}$ commençant par la première abscisse u du premier signal situé à $(1+M)/4$ périodes $T_1$, M étant un nombre réel positif inférieur ou égal à 2.0, préférentiellement M est la valeur unité, après la fin du premier signal tour de roue $Sig^{TdR1}$ ;
  - Délimiter le second signal tour de roue $Sig^{TdR2}$ sur une durée t2 correspondant à la période $T_1$ multipliée par un nombre entier naturel N2, préférentiellement N2 est la valeur unité ;
  - Le nombre de tour de roue $N^{TaR2}$ est égal à N2.
  - Identifier une première série d'incréments K correspondant à l'abscisse u du premier signal, en commençant par l'abscisse u ayant servi à terminer le premier signal tour de roue $Sig^{TdR1}$, où le premier signal passe au-dessus ou en dessous d'une valeur seuil E', préférentiellement inférieure ou égale à la moitié de la première accélération de référence $\gamma^{reference1}$ ;

  - Déterminer $N'^{U2}$ comme le nombre de points du premier signal :

    - situés entre les incréments $K_1$ et $K_{N2+1}$ par la formule :

[Math 6]

$$N'^{U2} = \frac{\left(U_{K_{N2+1}} - U_{K_1}\right)}{N2} * N2 \quad ;$$

- où situés entre les incréments $K_1$ et $K_{N2+2}$ par la formule :

[Math 7]

$$N'^{U2} = \frac{\left(U_{K_{N2+2}} - U_{K_1}\right)}{N2+1} * N2 \quad .$$

**7.** Méthode d'obtention de la déformation d'une enveloppe pneumatique selon l'une des revendications 1 à 6 dans laquelle le seuil A pour définir la première densité d'énergie est fonction de la première accélération de référence $\gamma^{reference1}$.

**8.** Méthode d'obtention de la déformation d'une enveloppe pneumatique selon la revendication 7 dans laquelle le seuil A pour définir la première densité d'énergie est fonction d'un facteur C, le facteur C est supérieur ou égal à 0,5 et inférieur ou égal à 0.9, selon la formule suivante :

[Math 8]

$$A = C * \gamma^{reference1}$$

**9.** Méthode d'obtention de la déformation d'une enveloppe pneumatique selon l'une des revendications précédentes dans laquelle, ayant phasé le second signal tour de roue $Sig^{TaR2}$ par rapport à une position angulaire de l'enveloppe pneumatique, une correction Corr est apportée au second signal tour de roue $Sig^{TaR2}$ pour prendre en compte l'effet de la gravité terrestre.

**10.** Méthode d'obtention de la déformation d'une enveloppe pneumatique selon l'une des revendications 1 à 9 dans laquelle, l'identification de la déformation de l'enveloppe pneumatique $Def_\%$ comprend les étapes suivantes

- Lors de la deuxième phase ;

- Déterminer une deuxième accélération de référence $\gamma^{reference2}$ associée deuxième signal tour de roue $Sig^{TdR2}$, celle-ci étant définie comme la valeur moyenne du deuxième signal tour de roue $Sig^{TaR2}$ ramené à un tour de roue selon la formule suivante :

[Math 9]

$$\gamma^{reference2} = \frac{\left(\sum_{Sig^{TdR2}} Sig^{TdR2}\right)}{N'^{U2}}$$

- Identifier une valeur O comme étant la valeur $N^{U2}$ sauf si $N'^{U2}$ existe alors la valeur O est $N'^{U2}$ ;
- Identifier la déformation de l'enveloppe pneumatique $Def_\%$ générée par la charge selon l'une des formules suivantes :

[Math 10a]

$$Def_\% = \frac{N^{U1}}{O} * \frac{\left[S^+ + \left(\gamma^{reference1} - \gamma^{refernce2}\right) * N^{TdR2}\right]}{\left(N^{TdR2} * \gamma^{reference1}\right)}$$

, ou

[Math 10b]

$$Def_{\%} = \frac{N^{U1}}{O} * \frac{(S^-)}{(N^{TdR2} * \gamma^{reference1})} \quad \text{, ou}$$

[Math 10c]

$$Def_{\%} = \frac{N^{U1}}{O} * \frac{[S^+ + S^- + (\gamma^{reference1} - \gamma^{reference2}) * N^{TdR2}]}{2 * (N^{TdR2} * \gamma^{reference1})} \quad .$$

**11.** Méthode d'obtention de la déformation d'une enveloppe pneumatique selon l'une des revendications 1 à 10 dans laquelle le nombre de tour de roue $N^{TdR2}$ du deuxième signal tour de roue $Sig^{TdR2}$ est la valeur unité et le nombre de tour de roue $N^{TdR1}$ du premier signal tour de roue $Sig^{TdR1}$ est la valeur unité.

**12.** Méthode d'obtention de la déformation d'une enveloppe pneumatique selon l'une des revendications 1 à 11 dans laquelle ayant effectué $N_i$ évaluations, préférentiellement $N_i$ est un nombre entier compris entre 3 et 10, très préférentiellement 5, de la déformation de l'enveloppe pneumatique $Def^i_{\%}$ sur différents premiers et deuxièmes signaux tour de roue $Sig_i^{TdR1}$, $Sig_i^{TdR2}$ sur le même premier signal, la déformation de l'enveloppe pneumatique $Def_{\%}$ est la moyenne des déformations de l'enveloppe pneumatique $Def^i_{\%}$ selon la formule suivante :

[Math 11]

$$Def_{\%} = \frac{\sum_i Def^i_{\%}}{N_i}$$

**13.** Méthode d'obtention de la déformation d'une enveloppe pneumatique selon la revendication 12 dans laquelle les $N_i$ évaluations sont faites successivement de sorte que la deuxième phase de l'évaluation $N_i$ soit la première phase de l'évaluation Ni+i.

**Patentansprüche**

**1.** Verfahren zum Bestimmen der Verformung eines einer Last unterworfenen Reifenmantels in einem aufgeblasenen und mit einer Drehzahl W drehend belasteten Zustand, wobei der Reifenmantel einen Scheitel, zwei Flanken und zwei Wülste in einer Umdrehung um eine natürliche Drehachse und eine Mittelebene aufweist, wobei der Schnittpunkt der Mittelebene mit der natürlichen Drehachse einen Radmittelpunkt definiert, aufweisend die folgenden Schritte:

- Befestigen mindestens eines Sensors an dem Reifenmantel direkt unter dem Scheitel mit einer radialen Position R in Bezug auf die natürliche Drehachse, die geeignet ist, mindestens ein Ausgangssignal proportional zu der von dem Sensor in dem Reifenmantel erfahrenen Beschleunigung zu erzeugen;
- Durchführen der Erfassung eines ersten Abszissensignals u, das mindestens die Amplitude der Beschleunigung in der Normalenrichtung auf den Scheitel bei einem Fahren mit der Drehzahl W bei einer Abtastfrequenz fe aufweist, deren räumliche Diskretisierung kleiner als 6 Grad, vorzugsweise kleiner als 3 Grad, besonders bevorzugt kleiner als 1 Grad ist;
- während einer ersten Phase:

  - Einfrieren einer ersten konstanten Abtastfrequenz fe1;
  - Begrenzen des ersten Signals auf eine ganze Zahl $N^{TdR1}$ von Radumdrehungen, wobei $N^{TdR1}$ größer oder gleich 1 ist, um ein erstes Radumdrehungssignal $Sig^{TdR1}$ zu bilden;
  - Ermitteln einer ersten Referenzbeschleunigung $\gamma^{reference1}$ als der Mittelwert des auf eine Radumdrehung zurückgeführten Radumdrehungssignals $Sig^{TdR1}$ gemäß der folgenden Formel:

[Math 1]

$$\gamma^{reference1} = \frac{\left(\sum_{Sig^{TdR1}} Sig^{TdR1}\right)}{N^{U1}}$$

- wo $N^{U1}$ die Anzahl an Punkten von $Sig^{TdR1}$ ist

- während einer zweiten Phase:

  - Einfrieren einer zweite konstanten Abtastfrequenz fe2;
  - Begrenzen des ersten Signals auf eine ganze Zahl $N^{TdR2}$ von Radumdrehungen, wobei $N^{TaR2}$ größer oder gleich 1 ist, um ein zweites Radumdrehungssignal $Sig^{TaR2}$ zu bilden;
  - Definieren mindestens einer ersten Energiedichte S, die eine Funktion des zweiten Raddrehsignals $Sig^{TdR2}$, der Referenzbeschleunigung $\gamma^{reference1}$ ist, S⁺ genannt, wenn das Radumdrehungssignal größer als ein Schwellenwert A ist, oder S⁻ genannt, wenn das Radumdrehungssignal kleiner oder gleich dem Schwellenwert A ist, gemäß den folgenden Formeln:

[Math 2a]

$$S^+ = \left|\sum_{Sig^{TdR2}>A}\left(Sig^{TdR2} - \gamma^{Reference1}\right)\right| * \frac{N^{TdR2}}{N^{U2}}$$

; und

[Math 2b]

$$S^- = \left|\sum_{Sig^{TdR2}\le A}\left(Sig^{TdR2} - \gamma^{Reference1}\right)\right| * \frac{N^{TdR}}{N^{U2}};$$

- wo $N^{U2}$ die Anzahl an Punkten von $Sig^{TdR2}$ ist

- Identifizieren der durch die Last erzeugte Verformung des Reifenmantels $Def_\%$ als eine Funktion der Referenzbeschleunigung $\gamma^{reference1}$ und der ersten Energiedichte S gemäß einer der folgenden Formeln:

[Math 3 a]

$$Def_\% = \frac{N^{U1}}{N^{U2}} * \frac{\left|\sum_{Sig^{TdR2}>A}\left(Sig^{TdR2} - \gamma^{Reference1}\right)\right|}{\left(\sum_{Sig^{TdR1}} Sig^{TdR1}\right)}$$

, oder

[Math 3b]

$$Def_\% = \frac{N^{U1}}{N^{U2}} * \frac{\left|\sum_{Signal^{TdR2}\le A}\left(Sig^{TdR2} - \gamma^{Reference1}\right)\right|}{\left(\sum_{Sig^{TdR1}} Sig^{TdR1}\right)}$$

, oder

[Math 3c]

$$Def_\% = \frac{N^{U1}}{N^{U2}} * \frac{\left|\sum_{Sig^{TdR2}>A}\left(Sig^{TdR2} - \gamma^{Reference1}\right)\right| + \left|\sum_{Sig^{TdR2}\le A}\left(Sig^{TdR2} - \gamma^{Reference1}\right)\right|}{2 * \left(\sum_{Sig^{TdR1}} Sig^{TdR1}\right)} .$$

**2.** Verfahren zum Bestimmen der Verformung eines Reifenmantels nach Anspruch 1, bei dem die Erfassung des ersten Signals für eine Drehzahl W größer oder gleich einer Schwellendrehzahl $W_{seuil}$ vorgenommen wird, die durch die folgende Formel definiert ist:

[Math 4]

$$W_{seuil} = \frac{12}{\sqrt{Dev}}$$

- wo Dev die Entwicklung des Reifenmantels ist.

**3.** Verfahren zum Bestimmen der Verformung eines Reifenmantels nach einem der Ansprüche 1 bis 2, bei dem das Begrenzen des ersten Signals auf eine Zahl $N^{TdR1}$ die folgenden Schritte aufweist:

- während der ersten Phase:

- Identifizieren einer ersten Reihe von Inkrementen I, die der Abszisse u des ersten Signals entsprechen, wo das erste Signal über oder unter einen Schwellenwert E gelangt;
- Begrenzen des ersten Signals zwischen einem ersten Inkrement $I_{min}$ und einem zweiten Inkrement $I_{max}$, um ein erstes Radumdrehungssignal $Sig^{TdR1}$ zu bilden;
- Ermitteln der Anzahl an Radumdrehungen $N^{TdR1}$ als die Differenz $I_{max}$ minus $I_{min}$.

**4.** Verfahren zum Bestimmen der Verformung eines Reifenmantels nach Anspruch 3, bei dem das Identifizieren der Schwelle E die folgenden Schritte aufweist:

- vor der ersten Phase:

- Festlegen einer Abtastfrequenz fe0 auf einen ersten Teil des ersten Signals;
- Identifizieren des Maximalwerts MAX auf dem ersten Teil des ersten Signals;
- Definieren eines Schwellenwerts E, der eine Funktion des Werts MAX ist; vorzugsweise liegt E zwischen 10% und 50% von MAX.

**5.** Verfahren zum Bestimmen der Verformung eines Reifenmantels nach einem der Ansprüche 1 bis 4, bei dem das Begrenzen des ersten Signals auf eine Zahl $N^{TdR2}$ die folgenden Schritte aufweist:

- während der zweiten Phase:

- Identifizieren einer ersten Reihe von Inkrementen J, die der Abszisse u des ersten Signals entsprechen, wo das erste Signal über oder unter einen Schwellenwert E' gelangt, vorzugsweise kleiner oder gleich der Hälfte der Referenzbeschleunigung $\Upsilon^{reference1}$;
- Begrenzen des ersten Signals zwischen einem ersten Inkrement $J_{min}$ und einem zweiten Inkrement $J_{max}$ um ein zweites Radumdrehungssignal $Sig^{TdR2}$ zu bilden;
- Ermitteln der Anzahl an Radumdrehungen $N^{TdR2}$ als Differenz $J_{max}$ minus $J_{min}$.

**6.** Verfahren zum Bestimmen der Verformung eines Reifenmantels nach einem der Ansprüche 1 bis 4, bei dem das Begrenzen des ersten Signals auf eine Zahl $N^{TdR2}$ die folgenden Schritte aufweist:

- während der ersten Phase:

- Identifizieren der Periode $T_1$ gemäß der folgenden Formel:

[Math 5]

$$T_1 = \frac{N^{1/1}}{fe1 * N^{TdR1}}$$

- während der zweiten Phase;

- Bilden eines zweiten Radumdrehungssignals $Sig^{TdR2}$, das mit der ersten Abszisse u des bei (1+M)/4 Perioden $T_1$ gelegenen ersten Signals beginnt, wobei M eine positive reale Zahl kleiner oder gleich 2,0 ist, vorzugsweise ist M der Einheitswert, nach dem Ende des ersten Radumdrehungssignals $Sig^{TdR1}$;

- Begrenzen des zweiten Radumdrehungssignals $Sig^{TdR2}$ über eine Dauer t2, die der Periode T1 multipliziert mit einer natürlichen ganzen Zahl N2 entspricht, vorzugsweise ist N2 der Einheitswert;
- Die Anzahl an Radumdrehungen $N^{TdR2}$ ist gleich N2;
- Identifizieren einer ersten Reihe von Inkrementen K, die der Abszisse u des ersten Signals entsprechen, beginnend mit der Abszisse u, die zum Beenden des ersten Radumdrehungssignals $Sig^{TdR1}$ gedient hat, wo das erste Signal über oder unter einen Schwellenwert E' gelangt, der vorzugsweise kleiner oder gleich der Hälfte der Referenzbeschleunigung $\gamma^{reference1}$ ist;
- Ermitteln von $N'^{U2}$ als die Anzahl an Punkten des ersten Signals:

- die zwischen den Inkrementen $K_1$ und $K_{n2+1}$ liegen, durch die Formel:

[Math 6]

$$N'^{U2} = \frac{\left(U_{K_{N2+1}} - U_{K_1}\right)}{N2} * N2$$

;
- oder zwischen den Inkrementen $K_1$ und $K_{n2+2}$ liegen, durch die Formel:

[Math 7]

$$N'^{U2} = \frac{\left(U_{K_{N2+2}} - U_{K_1}\right)}{N2+1} * N2$$

**7.** Verfahren zum Bestimmen der Verformung eines Reifenmantels nach einem der Ansprüche 1 bis 6, bei dem die Schwelle A zum Definieren der ersten Energiedichte eine Funktion der ersten Referenzbeschleunigung $\gamma^{reference1}$ ist.

**8.** Verfahren zum Bestimmen der Verformung eines Reifenmantels nach Anspruch 7, bei dem die Schwelle A zum Definieren der ersten Energiedichte eine Funktion eines Faktors C ist, der Faktor C größer oder gleich 0,5 und kleiner oder gleich 0,9 ist, gemäß der folgenden Formel:

[Math 8]

$$A = C * \gamma^{reference1}$$

**9.** Verfahren zum Bestimmen der Verformung eines Reifenmantels nach einem der vorhergehenden Ansprüche, bei dem, nachdem das zweite Radumdrehungssignal $Sig^{TdR2}$ in Bezug auf eine Winkelposition des Reifenmantels abgestimmt wurde, eine Korrektur Corr an dem zweiten Radumdrehungssignal $Sig^{TdR2}$ vorgenommen wird, um die Wirkung der Erdschwerkraft zu berücksichtigen.

**10.** Verfahren zum Bestimmen der Verformung eines Reifenmantels nach einem der Ansprüche 1 bis 9, bei dem das Identifizieren der Verformung des Reifenmantels $Def_\%$ die folgenden Schritte aufweist:

- während der zweiten Phase;

- Ermitteln einer mit dem zweiten Radumdrehungssignal $Sig^{TdR2}$ verknüpften zweiten Referenzbeschleunigung $\gamma^{reference2}$, welche als der Mittelwert des auf eine Radumdrehung zurückgeführten zweiten Radumdrehungssignals $Sig^{TaR2}$ definiert ist, gemäß der folgenden Formel:

[Math 9]

$$\gamma^{reference2} = \frac{\left(\Sigma_{Sig^{TaR2}} Sig^{TdR2}\right)}{N^{U2}}$$

- Identifizieren eines Werts O als der Wert $N^{U2}$, außer wenn $N'^{U2}$ existiert, dann ist der Wert O $N'^{U2}$;
- Identifizieren der durch die Last erzeugten Verformung des Reifenmantels $Def_\%$ gemäß einer der folgenden Formeln:

[Math 10a]

$$Def_\% = \frac{N^{U1}}{O} * \frac{\left[S^+ + \left(\gamma^{reference1} - \gamma^{refernce2}\right) * N^{TdR2}\right]}{\left(N^{TdR2} * \gamma^{reference1}\right)}$$

, oder

[Math 10b]

$$Def_\% = \frac{N^{U1}}{O} * \frac{\left(S^-\right)}{\left(N^{TdR2} * \gamma^{reference1}\right)}$$

, oder

[Math 10c]

$$Def_\% = \frac{N^{U1}}{O} * \frac{\left[S^+ + S^- + \left(\gamma^{reference1} - \gamma^{reference2}\right) * N^{TdR2}\right]}{2 * \left(N^{TdR2} * \gamma^{reference1}\right)}$$

11. Verfahren zum Bestimmen der Verformung eines Reifenmantels nach einem der Ansprüche 1 bis 10, bei dem die Anzahl an Radumdrehungen $N^{TdR2}$ des zweiten Radumdrehungssignals $Sig^{TdR2}$ der Einheitswert und die Anzahl an Radumdrehungen $N^{TdR1}$ des ersten Radumdrehungssignals $Sig^{TdR2}$ der Einheitswert ist.

12. Verfahren zum Bestimmen der Verformung eines Reifenmantels nach einem der Ansprüche 1 bis 11, bei dem, nachdem $N_i$ Auswertungen, vorzugsweise ist $N_i$ eine ganze Zahl zwischen 3 und 10, besonders bevorzugt 5, der Verformung des Reifenmantels $Def_\%$ über unterschiedlichen ersten und zweiten Radumdrehungssignalen $Sig_i^{TdR1}$, $Sig_i^{TdR2}$ über demselben ersten Signal vorgenommen wurden, die Verformung des Reifenmantels $Def_\%$ das Mittel der Verformungen des Reifenmantels $Def_\%$ gemäß der folgenden Formel ist:

[Math 11]

$$Def_\% = \frac{\sum_i Def_\%^i}{N_i}$$

13. Verfahren zum Bestimmen der Verformung eines Reifenmantels nach Anspruch 12, bei dem die $N_i$ Auswertungen nacheinander so gemacht werden, dass die zweite Phase der Auswertung $N_i$ die erste Phase der Auswertung $N_{i+1}$ ist.

**Claims**

1. Method for obtaining the deformation of a tyre casing subjected to a load, in an inflated and laden state rotating at a rotational speed W, said tyre casing having a crown, two sidewalls and two beads of revolution about a natural axis of rotation and a median plane, the intersection between the median plane and the natural axis of rotation defining a wheel centre, comprising the following steps:

- Fixing at least one sensor on the tyre casing in line with the crown at a radial position R with respect to the natural axis of rotation and able to generate at least one output signal proportional to the acceleration experienced by said sensor in the tyre casing;
- Acquiring a first abscissa signal u comprising at least the amplitude of the acceleration in the direction normal to the crown when running at the rotational speed W, at a sampling frequency fe the spatial discretization of which is less than 6 degrees, preferably less than 3 degrees, and very preferably less than 1 degree;
- During a first phase:

- Fixing a constant first sampling frequency fe1;
- Delimiting the first signal over a whole number $N^{TaR1}$ of wheel revolutions, $N^{TaR1}$ being greater than or equal to 1, so as to construct a first wheel revolution signal SigTdR1;
- Determining a first reference acceleration $\gamma^{reference1}$ as being the mean value of the wheel revolution signal $Sig^{TdR1}$ with respect to one wheel revolution, using the following formula:

[Math 1]

$$\gamma^{reference1} = \frac{\left(\sum_{Sig^{TdR1}} Sig^{TdR1}\right)}{N^{U1}}$$

- where $N^{U1}$ is the number of points in $Sig^{TdR1}$
- During a second phase:

   - Fixing a constant second sampling frequency fe2;
   - Delimiting the first signal over a whole number $N^{TdR2}$ of wheel revolutions, $N^{TdR2}$ being greater than or equal to 1, so as to construct a second wheel revolution signal SigTdR2;
   - Defining at least a first energy density S which is a function of the second wheel revolution signal $Sig^{TdR2}$, and of the reference acceleration $\gamma^{reference1}$, and which is denoted $S^+$ when the wheel revolution signal is above a threshold value A, or is denoted $S^-$ when the wheel revolution signal is below or equal to said threshold value A, using the following formulae:

[Math 2a]

$$S^+ = \left|\sum_{Sig^{TdR2}>A}(Sig^{TdR2} - \gamma^{Reference1})\right| * \frac{N^{TdR2}}{N^{U2}}$$

; and

[Math 2b]

$$S^- = \left|\sum_{Sig^{TdR2}\leq A}(Sig^{TdR2} - \gamma^{Reference1})\right| * \frac{N^{TdR2}}{N^{U2}}$$

;

   - Where $N^{U2}$ is the number of points in $Sig^{TdR2}$

   - Identifying the deformation of the tyre casing $Def_\%$, which deformation is generated by the load as a function of the reference acceleration $\gamma^{reference1}$ and of the first energy density S using one of the following formulae:

[Math 3a]

$$Def_\% = \frac{N^{U1}}{N^{U2}} * \frac{\left|\sum_{Sig^{TdR2}>A_o}(Sig^{TdR2} - \gamma^{Reference1})\right|}{\left(\sum_{Sig^{TdR1}} Sig^{TdR1}\right)}$$

, or

[Math 3b]

$$Def_\% = \frac{N^{U1}}{N^{U2}} * \frac{\left|\sum_{Signal^{TdR2}\leq A}(Sig^{TdR2} - \gamma^{Reference1})\right|}{\left(\sum_{Sig^{TdR1}} Sig^{TdR1}\right)}$$

, or

[Math 3c]

$$Def_\% = \frac{N^{U1}}{N^{U2}} * \frac{\left|\sum_{Sig^{TdR2}>A}\left(Sig^{TdR2}-\gamma^{Reference1}\right)\right| + \left|\sum_{Sig^{TdR2}\leq A}\left(Sig^{TdR2}-\gamma^{Reference1}\right)\right|}{2*\left(\sum_{Sig^{TdR1}}Sig^{TdR1}\right)}$$ .

2. Method for obtaining the deformation of a tyre casing according to Claim 1, wherein the acquisition of the first signal is performed for a rotational speed W greater than or equal to a threshold rotational speed $W_{seuil}$ defined by the following formula:

[Math 4]

$$W_{seuil} = \frac{12}{\sqrt{Dev}}$$

- where Dev is the development of the tyre casing.

3. Method for obtaining the deformation of a tyre casing according to one of Claims 1 and 2, wherein the delimiting of the first signal over a number $N^{TdR1}$ of wheel revolutions comprises the following steps:

- During the first phase:

- Identifying a first series of increments I, corresponding to the abscissa value u of the first signal at which the first signal crosses above or below a threshold value E.
- Delimiting the first signal between a first increment $I_{min}$ and a second increment $I_{max}$ so as to construct a first wheel revolution signal $Sig^{TaR1}$;
- Determining the number of wheel revolutions $N^{TaR1}$ as being the difference $I_{max}$ minus $I_{min}$ ,

4. Method for obtaining the deformation of a tyre casing according to Claim 3, wherein the identification of the threshold E comprises the following steps:

- Before the first phase:

- Fixing a sampling frequency fe0 for a first part of the first signal;
- Identifying the maximum value MAX on the first part of the first signal;
- Defining a threshold value E which is a function of the value MAX, E preferably being comprised between 10% and 50% of MAX.

5. Method for obtaining the deformation of a tyre casing according to one of Claims 1 to 4, wherein the delimiting of the first signal over a number $N^{TdR2}$ of wheel revolutions comprises the following steps:

- During the second phase:

- Identifying a first series of increments J, corresponding to the abscissa value u of the first signal at which the first signal crosses above or below a threshold value E, preferably less than or equal to half the first reference acceleration $\gamma^{reference1}$;
- Delimiting the first signal between a first increment $J_{min}$ and a second increment $J_{max}$ so as to construct a second wheel revolution signal $Sig^{TdR2}$,
- Determining the number of wheel revolutions $N^{TaR2}$ as being the difference $J_{max}$ minus $J_{min}$ ,

6. Method for obtaining the deformation of a tyre casing according to one of Claims 1 to 4, wherein the delimiting of the first signal over a number $N^{TdR2}$ of wheel revolutions comprises the following steps:

- During the first phase:

- Identifying the period $T_1$ using the following formula:

[Math 5]

$$T_1 = \frac{N^{U1}}{fe1 * N^{TdR1}}$$

- During the second phase:

- Constructing a second wheel revolution signal Sig$^{TdR2}$ beginning with the abscissa value u of the first signal situated at (1+M)/4 periods $T_1$, M being a real positive number less than or equal to 2.0, preferably M is equal to unity, after the end of the first wheel revolution signal Sig$^{TdR1}$;
- Delimiting the second wheel revolution signal Sig$^{TdR2}$ over a duration t2 corresponding to the period $T_1$ multiplied by a natural whole number N2, N2 preferably being unity;
- The number of wheel revolutions N$^{TaR2}$ is equal to N2.
- Identifying a first series of increments K, corresponding to the abscissa value u of the first signal beginning with the abscissa value u used to end the first wheel revolution signal Sig$^{TdR1}$, at which the first signal crosses above or below a threshold value E', preferably less than or equal to half the first reference acceleration $\gamma^{reference1}$;
- Determining N'$^{U2}$ as being the number of points in the first signal:
- which are situated between the increments $K_1$ and $K_{N2+1}$, using the formula:

[Math 6]

$$N'^{U2} = \frac{\left(U_{K_{N2+1}} - U_{K_1}\right)}{N2} * N2$$

;
- or which are situated between the increments $K_1$ and $K_{N2+2}$, using the formula:

[Math 7]

$$N'^{U2} = \frac{\left(U_{K_{N2+2}} - U_{K_1}\right)}{N2+1} * N2$$

.

7. Method for obtaining the deformation of a tyre casing according to one of Claims 1 to 6, wherein the threshold value A for defining the first energy density is a function of the first reference acceleration $\gamma^{reference1}$

8. Method for obtaining the deformation of a tyre casing according to Claim 7, wherein the threshold value A for defining the first energy density is a function of a factor C, the factor C being greater than or equal to 0.5 and less than or equal to 0.9, using the following formula:

[Math 8]

$$A = C * \gamma^{reference1}$$

9. Method for obtaining the deformation of a tyre casing according to one of the preceding claims, wherein, having phased the second wheel revolution signal Sig$^{TdR2}$ with respect to an angular position of the tyre casing, a correction Corr is made to the second wheel revolution signal Sig$^{TdR2}$ to take account of the effect of the Earth's gravity.

10. Method for obtaining the deformation of a tyre casing according to one of Claims 1 to 9, wherein the identification of the deformation of the tyre casing Def$_{\%}$ comprises the following steps:

- During the second phase:

- Determining a second reference acceleration $\gamma^{\text{reference2}}$ associated with the second wheel revolution signal $\text{Sig}^{\text{TdR2}}$, the latter being defined as being the mean value of the second wheel revolution signal $\text{Sig}^{\text{TdR2}}$ with respect to one wheel revolution, using the following formula:

[Math 9]

$$\gamma^{\text{reference2}} = \frac{\left(\Sigma_{Sig^{TdR2}} Sig^{TdR2}\right)}{N^{U2}}$$

- Identifying a value O as being the value $N^{U2}$ unless $N'^{U2}$ exists, in which case the value of O is $N'^{U2}$;
- Identifying the deformation of the tyre casing $\text{Def}_\%$, which deformation is generated by the load, using one of the following formulae:

[Math 10a]

$$Def_\% = \frac{N^{U1}}{O} * \frac{\left[S^+ + \left(\gamma^{reference1} - \gamma^{refernce2}\right) * N^{TdR2}\right]}{\left(N^{TdR2} * \gamma^{reference1}\right)}$$

, or

[Math 10b]

$$Def_\% = \frac{N^{U1}}{O} * \frac{(S^-)}{\left(N^{TdR2} * \gamma^{reference1}\right)}$$

, or

[Math 10c]

$$Def_\% = \frac{N^{U1}}{O} * \frac{\left[S^+ + S^- + \left(\gamma^{reference1} - \gamma^{reference2}\right) * N^{TdR2}\right]}{2 * \left(N^{TdR2} * \gamma^{reference1}\right)}$$

.

11. Method for obtaining the deformation of a tyre casing according to one of Claims 1 to 10, wherein the number of wheel revolutions $N^{\text{TdR2}}$ of the second wheel revolution signal $\text{Sig}^{\text{TdR2}}$ is unity, and the number of wheel revolutions $N^{\text{TdR1}}$ of the first wheel revolution signal $\text{Sig}^{\text{TdR1}}$ is unity.

12. Method for obtaining the deformation of a tyre casing according to one of Claims 1 to 11 wherein, having made $N_i$ evaluations, $N_i$ preferably being a whole number comprised between 3 and 10, and very preferably 5, of the deformation of the tyre casing $\text{Def}_\%$ over different first and second wheel revolution signals $\text{Sig}_i^{\text{TdR1}}$, $\text{Sig}_i^{\text{TdR2}}$ in the one same first signal, the deformation of the tyre casing $\text{Def}_\%$ is the mean of the deformations of the tyre casing $\text{Def}^i_\%$ according to the following formula:

[Math 11]

$$Def_\% = \frac{\Sigma_i Def^i_\%}{N_i}$$

13. Method for obtaining the deformation of a tyre casing according to Claim 12, wherein the $N_i$ evaluations are performed successively so that the second phase of the evaluation $N_i$ is the first phase of the evaluation $N_{i+1}$.

**FIG. 1**

**FIG. 2**

**FIG. 3**

**FIG. 4**

**FIG. 5**

**FIG. 6**

## RÉFÉRENCES CITÉES DANS LA DESCRIPTION

**Documents brevets cités dans la description**

- WO 2017032466 A1
- WO 2006034731 A1